# EUROPEAN PATENT SPECIFICATION

(11) **EP 1 021 496 B1**
(45) Date of publication and mention of the grant of the patent: **14.07.2004**
(21) Application number: 98915024.8
(22) Date of filing: 31.03.1998
(51) Int. Cl.: C10B 53/00, C10B 1/10

(54) **CLOSED-LOOP CONTINUOUS OPERATING PYROLYSIS SYSTEM FOR PROCESSING RUBBER WASTE**
KONTINUIERLICHES BETREIBEN EINER PYROLYSEANLAGE IN GESCHLOSSENEM ARBEITSKREIS ZUR ENTSORGUNG VON GUMMI ABFÄLLE
SYSTEME DE PYROLYSE FONCTIONNANT EN CONTINU EN BOUCLE FERMEE PERMETTANT DE TRAITER LES REBUTS DE CAOUTCHOUC

(30) Priority: 06.10.1997 HU 9700256 U
(43) Date of publication of application: 26.07.2000
(73) Proprietor: Barsi, Péter, 1015 Budapest (HU); Fülöp, Tibor, 1118 Budapest (HU); Siska, Jozsef, 1185 Budapest (HU); Sugár, György, 1097 Budapest (HU)
(72) Inventor: Barsi, Péter, 1015 Budapest (HU); Fülöp, Tibor, 1118 Budapest (HU); Siska, Jozsef, 1185 Budapest (HU); Sugár, György, 1097 Budapest (HU)
(74) Representative: Gold, Tibor Z.
(86) International application number: PCT/HU1998/000034
(87) International publication number: WO 1999/018171

(56) References cited:
- WO-A-89/04355
- DE-A- 3 531 647
- DE-A- 3 835 451
- DE-C- 3 721 451
- US-A- 4 235 676

## Description

### Field of the Invention

The invention relates to a continuous operating system for processing crushed rubber waste, by the aid of which - considering the quantity of the fed rubber waste - environment protecting liquid hydrocarbon of approximately 40-45 weight percent as well as coke of 30-45 weight percent can be produced as end product suitable for further processing. The closed-loop, controlled system according to the invention ensures more economical recycling as compared to the known solutions and its importance is increased by the fact that the flue-gas leaving the system contains components harmful to the environment only in small quantities and much less than the permissible limit value.

Nowadays exploring the recycling possibilities for processing of the wastes accumulating in the environment is a centrally important technical task.

Numerous efforts are known for recycling rubber wastes - such as the rubber tires; however, most of them have proved uneconomical or unsuitable for the mass production.

### Prior Art

There are known such kinds of solutions for example, which tend to the regeneration of vulcanised grinds in order to be re-milled and re-calendered (recycling). The mutual disadvantage of the mentioned solutions is the considerable energy demand. As an example, HU-PS 157,607 patent specification describes a solution, wherein the regeneration is performed only in the surface layers by means of double-stage heating process in the presence of oxygen by solution of double bonds.

A further part of the known solutions produce products from mechanically crushed rubber waste, e. g. AT-PS 339,797 as well as AT-PS 355.291, and AT-PS 368,446 as well as CH-PS 601,567 disclose the preparation of floor-coverings and coverings for sports grounds; while from DD-PS 252,945 and HU-PS 206,383 patent specifications a process is known for producing shaped heat-insulating and noiseproof products. Furthermore, the use of the crushed rubber granule material in road construction is also known, which is disclosed in DD-PS 121,744 patent specification. The advantage of these kind of solutions is that the end product is made essentially from waste materials, and its disadvantage lies however in the fact that there is no considerable market demand for the products.

In a further field, rubber waste is used for recovering fuel material, e.g. according to the DE-PS 2,131,519 granules of rubber waste are mixed with coal grains, moulded and finally briquetted at a temperature of the 500-600 °C. In the case of the solution described in CH-PS 615,215, granules of the rubber waste are mixed with coal dust, and then heat-treated. According to the DE-PS 2,254,472 rubber waste is also used for recovering as fuel material, wherein the crushed rubber tire is mixed with black oil. As a matter of course, these processes destroy the rubber wastes by burning.

Finally, the solutions have to be mentioned, wherein the aim is to reclaim the petroleum fractions, organic chemical raw materials used for the rubber production. Such a process is disclosed in Hungarian patent publication number T/40.833, wherein rubber waste is mixed with coal and/or coke, and after that in a discontinuous operating carbonisation chamber (advantageously as used in metallurgy or in the appliances producing domestic gas) it will be carbonised. The advantage of the solution is in that the oil tar arising during the heat treatment bums on the particles of the coal or coke and increases their mass, while its disadvantage is the uneconomical discontinuous operation. From the US-PS 4,202,613 an apparatus is known wherein during continuous operation partial oxidation and pyrolysis takes place. GB-PS 1,437,224 discloses a process similarly for continuous operation, wherein the partial gasification of rubber chips takes place at a rate of air supply lower than the stoichiometric air demand, and as a result of the process burnable gas and coke is regenerated.

### Summary of the Invention

The aim of the invention is to provide a complex system (appliance) improving the known solutions, wherein recovery of the petroleum fractions can be realised more economically.

On the basis of the above-mentioned aim the invention relates to a pyrolysis system, which partly by means of continuous operation, partly by means of waste-heat recovery and utilisation of products as fuel material for the end product constitutes a regulated and controlled closed-loop system working in counter current flow, which is self-supporting and has beneficial energy requirement.

The object of the invention is a closed-loop continuous operating pyrolysis system as defined in the accompanying claims.

In a preferred embodiment of the closed-loop pyrolysis system according to the invention the pyrolysis furnace is a rotary-drum furnace, and its heating apparatus is an oil burner.

It is advantageous furthermore, if the liquid outlet of the separating unit is joined to the oil burner.

In a further preferred embodiment the solid-product sump is provided with a sampling unit.

In a preferred embodiment the gas-meter is a measuring orifice.

In a simple embodiment according to the invention the gas coolers are water-cooled condensers, while the separating units are gravitational separating units, i.e. sumps having a gas-channel outlet and a liquid outlet.

In a given case, the separating unit(s) may be a known cyclone separator or vortex tube.

In a preferred embodiment according to the invention, for safety reasons, an oxygen and hydrocarbon concentration meter is coupled to the closed gas conduits.

### Brief Description of the Drawings

The invention is described in detail with the aid of the enclosed drawing presenting a simple embodiment of the pyrolysis system and its operation according to the invention by way of example which shows the block diagram of the pyrolysis system, indicating the fundamental controlling means.

### Description of the Preferred Embodiments

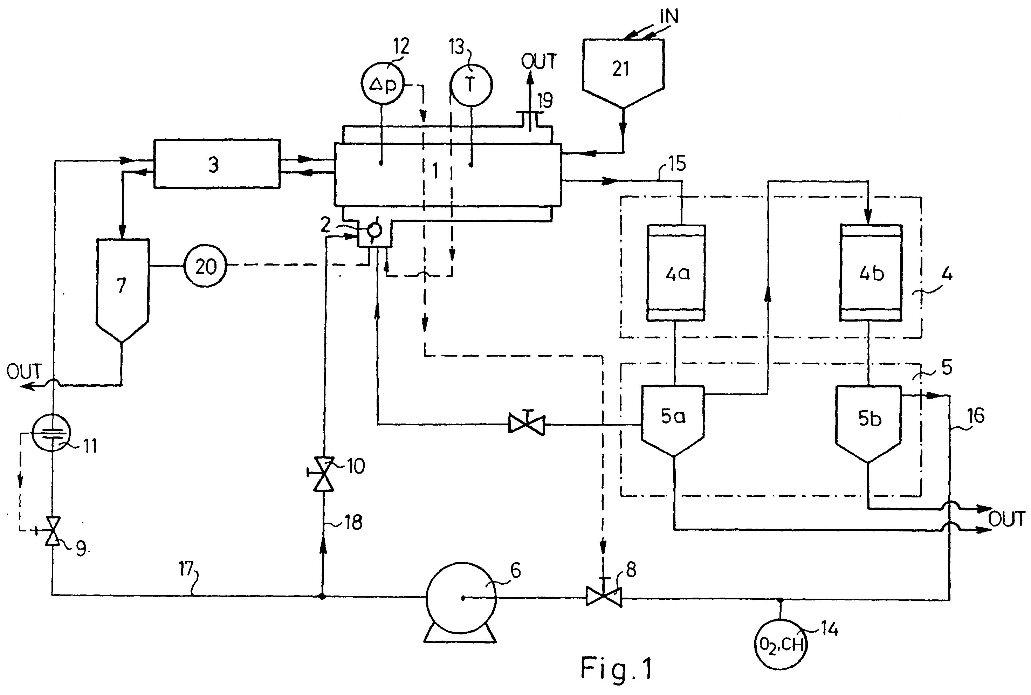

In the case of the embodiment according to the Fig. 1 a pyrolysis furnace 1 of the pyrolysis system according to the invention is a drum-type furnace of adjustable position, which is provided with a heating apparatus 2 (gas or oil burner) for heating the outer cover and also provided with a flue-gas outlet channel 19.

Onto one end of the drum-type pyrolysis furnace 1, a standing dosing tank 21 is joined. Therein are placed rubber granules advantageously with the grain size of 1 to 5 mm, which are continuously fed into the reactor chamber of the pyrolysis furnace 1 (the mass flow of the rubber waste can be controlled.)

Onto the other end of the pyrolysis furnace 1, via a heat exchanger 3, a solid-product sump 7 is joined. A gas collector conduit 15 joining to the reactor chamber of the pyrolysis furnace 1 serves for the drawing off of the hot hydrocarbon gases released during the decomposition of the rubber during the pyrolysis, which (gas collector conduit 15) is well-known in itself and joins to a gas cooler 4, to which a separating unit 5 is connected. In our example the gas cooler 4 consists of two series connected water-cooled condensers 4a and 4b, to the output of which one separating unit 5a and 5b (simple liquid collecting sump based on gravity) are connected. The gas space of the separating unit 5b is connected through a gas conduit 16. A control valve 8 is inserted into conduit 16 controlling the exhaustion of the gas space by a circulation ventilator 6. The gas from the gas space is partly fed to the heat exchanger 3 and partly to the heating apparatus 2 by means of a branch gas conduit 18. In one embodiment according to the invention - wherein the heating apparatus 2 of the pyrolysis furnace 1 comprises an oil burner - the liquid space of the separating unit 5a is also joined to the heating apparatus 2. In the gas conduit 17 leading to the heat exchanger 3, a gas-flow control valve 9 as well as a gas-meter 11 (in our example measuring orifice) are joined and the branch gas conduit 18 is also provided with a gas-flow control valve 10.

To ensure the adjustment (and control) of the reactor chamber of the pyrolysis furnace 1, a temperature detector 13 and a pressure gauge and/or pressure transmitter 12 are provided, the latter of which is connected to the actuating unit of the control valve 8. The solid-product sump 7 is provided with a sampling unit 20. Furthermore, in the Figure there is shown a concentration meter 14 joined to the gas conduit 16 as well, by the aid of which the composition of recycle gas mixture, especially its O₂, H₂ and CH content (low explosibility limit) can be continuously controlled in order to avoid a risk of explosion.

In the Figure the connection of the units are represented by full line, the direction of the material flow is shown by arrows, while the connection of the detecting elements and actuating units for controlling and adjusting tasks is represented by dash lines.

The operation and working principle of the pyrolysis system can be followed on the basis of the Figure. At the start, the closed system has to be filled with inert gas of atmospheric pressure, expediently with CO₂ gas or with an inert gas of high CO₂ content. Then by means of operating the circulation ventilator 6, the pressure is adjusted to the value of Δp = 0 -(-30) mm water column less than atmospheric pressure. The mild suction ensures - as the air-integrity of the system cannot be ensured in the practice or is difficult to realise - that the pyrolysis product should not get to the environment, preventing the contamination of the environment and the loss of material, and at the same time, ensuring the entry of air (especially its O₂ content) is negligibly small and does not disturb the process of the pyrolysis.

The circulation ventilator 6 continuously circulates the recirculated inert gas in counterflow with the fed rubber grinds, the quantity of which during the process increasingly extends and dresses (as a result of the pyrolysis process). The branch gas conduit 18 provided with gas-flow control valve 10 and joining to the heating apparatus 2, serves for using up excess gas for utilisation of its inflammable CH content.

The extent of the decomposition of the rubber waste, the quantitative proportions of the solid- and liquid products and their composition - naturally is a function of the fed initial reactant - depends fundamentally on the conditions of the pyrolysis taking place in the pyrolysis furnace 1, which is determined, in addition to its temperature T, by the contact time of the rubber waste especially its contact time with the counterflow gas (i.e. the contact time they spend together). Naturally it can be influenced by catalytic agent. Its co-ordinated adjustment (respectively controlling) is ensured by the detectors fitted into the system and by the controlling means, and by the form of the drum-type pyrolysis furnace 1.

The composition of the generated solid product is checked by the sampling unit 20 joining to the solid-product sump 7. The content of its volatile component is extremely characteristic of the extent of the decomposition; if the content of the volatile component is ≤1% the decomposition of the carbon compound can be considered practically complete. Depending on the result of the sampling, there is a possibility for controlling the temperature of the pyrolysis furnace 1. By increasing the temperature, the liquid-product yield increases, more exactly, the hydrocarbon content of the hot gas developing in the pyrolysis furnace 1 increases, and there is a possibility to control the contact period, the latter can be influenced e.g. by the feeding rate of the rubber grinds as well as controlling the gas flow speed and the gas flow quantity. The latter is made possible by the gas-meter 11 inserted into the gas conduit 17 as well as by the gas flow control valves 9 and 10, by means of which the gas quantity in the gas conduits 17 and 18 as well as the rate of the gas flow can be adjusted, as a function of the measured value.

The dwell time of the solid material (rubber grids) in the pyrolysis furnace 1 is about 10 to 120 minutes, the dwell time of the gas phase is 1 to 10 sec depending on the required composition of the generated products.

The exiting gas from the pyrolysis furnace 1 through the gas collector conduit 15 has a temperature of 400 to 600°C, which will be cooled by means of the separating unit (in our example into the gas coolers 4a and 4b and into the separating units 5a and 5b) and the thus condensed liquid product - in our example in two fractions - is separated from the gas. The composition and the quantity of the liquid product depends on the feedstock and essentially on the conditions of the pyrolysis. Its quantity considering the feedstock is 40 to 55 weight percent, while considering its composition, it can be considered light fuel, which is of natural oil type, rich in olefins and suitable for direct utilisation or further processing. The most essential feature of this liquid phase is in that - contrary to the natural oils - its sulphur content is very low, i.e. 0,6 to 0,8 percent. It is about the 1/3 of the sulphur content of the feedstock, while the further part of 2/3 accumulate in the solid product (coke). The small quantity of gas phase contains only a small sulphur content, so the flue gas can be exited directly and freely.

The recooled gas (the mixture of the inert gas and the generated CH gas) passing through the heat exchanger 3 contacts with the hot coke coming out of the pyrolysis furnace 1, and in cooling it down, considerably pre-heats itself. By this pre-heating the heating energy requirement of the system can be reduced by about 20-30 percent.

The content of the gas mixture enriched by hydrocarbon amounts to about 5-15 percent, which passing through the gas conduit 18 into the heating apparatus 2 will be utilised. By means of burning of the hydrocarbon comprised in the redundant gas - depending on the condition of the pyrolysis - 40 to 60 percent of the heat energy requirement can be provided.

Further required heat energy is ensured by burning about the 10 to 25 percent of the liquid product separated in the separating unit.

Accordingly, the closed-loop continuously operating pyrolysis system according to the invention generates itself the energy required for its operation, meanwhile produces re-utilisable, environment protecting end-product from the cheap, waste basic components, and the resultant by-products neither load nor pollute the environment.

## Claims

1. Closed-loop continuous operating pyrolysis system for processing rubber waste, comprising:
a pyrolysis furnace (1) provided with
a reactor chamber,
a dosing tank (21) for feeding rubber waste into the furnace (1),
a flue-gas channel (19) and an external heating unit (2) for heating the furnace (1) in the form of an oil or gas burner,
a gas collector conduit (15) for venting hot hydrocarbon gases released during the decomposition of the rubber during pyrolysis,
gas cooler(s) (4a, 4b) joined to the pyrolysis furnace by means of the gas collector conduit (15) for cooling the hydrocarbon gases, and separating unit(s) (5) having a gas space connected to an outlet gas conduit (16),
a solid-product sump (7) joined to the furnace (1),
a heat exchanger (3) arranged between the pyrolysis furnace (1) and the solid-product sump (7) connected to a gas conduit (17) provided with a gas-meter (11) and a gas-flow control valve (9) which gas supply conduit (17) supplies gas to the heat exchanger (3);
a circulation ventilator (6) and a suction control valve (8) joined to the outlet gas conduit (16) of the separating unit(s) (5, 5a, 5b) for circulating hydrocarbon gases from the separating units (5, 5a) to the gas conduit (17) and having a means for controlling the valve (8);
a branch gas conduit (18) provided with a gas-flow control valve (10) arranged after the circulation ventilator (6), and joined to the heating apparatus (2) to supply the hydrocarbon gases to the heating unit (2) as fuel;
wherein the reactor chamber of the pyrolysis furnace (1) is provided with a temperature detector (13) as well as a pressure gauge and/or pressure transmitter (12), and the pressure gauge and/or pressure transmitter (12) is connected to the controlling means of the suction control valve (8).

2. A closed-loop continuous operating pyrolysis system according to the Claim 1, **characterised in that** its pyrolysis furnace (1) is a rotary-drum furnace, and its heating apparatus (2) is an oil burner.

3. A closed-loop continuous operating pyrolysis system according to the Claim 1 or 2 **characterised in that** the liquid outlet of the separating unit (5, 5a, 5b) is joined to the heating apparatus (2).

4. A closed-loop continuous operating pyrolysis system according to any of the Claims 1 to 3, **characterised in that** its solid-product sump (7) is provided with a sampling unit (20).

5. A closed-loop continuous operating pyrolysis system according to any of the Claims 1 to 4, **characterised in that** its gas-meter (11) is a measuring orifice.

6. A closed-loop continuous operating pyrolysis system according to any of the Claims 1 to 5, **characterised in that** the gas coolers (4, 4a, 4b) are water-cooled condensers, while their separating units (5, 5a, 5b) are gravitational separating units having a gas-channel outlet and liquid outlet.

7. A closed-loop continuous operating pyrolysis system according to any of the Claims 1 to 6, **characterised in that** a concentration meter is coupled to one of their gas conduits (16, 17, 18).

## Revendications

1. Système de pyrolyse fonctionnant en continu en boucle fermée pour traiter les déchets de caoutchouc, comprenant :
un four de pyrolyse (1) avec
une chambre de réacteur,
un réservoir de dosage (21) pour charger des déchets de caoutchouc dans le four (1),
un canal de gaz de combustion (19) et une unité de chauffage externe (2) pour chauffer le four (1) sous la forme d'un brûleur à mazout ou à gaz;
une conduite collectrice de gaz (15) pour évacuer des hydrocarbures gazeux chauds libérés au cours de la décomposition du caoutchouc pendant la pyrolyse,
un ou des dispositifs de refroidissement de gaz (4a, 4b) reliés au four de pyrolyse au moyen de la conduite collectrice de gaz (15) pour refroidir les hydrocarbures gazeux et séparer la ou les unités (5) ayant un espace gazeux raccordé à une conduite de gaz de sortie (16),
une cuve pour produits solides (7) relié au four (1),
un échangeur de chaleur (3) disposé entre le four de pyrolyse (1) et la cuve pour produits solides (7) raccordée à une conduite de gaz (17) munie d'un compteur à gaz (11) et d'une soupape de régulation du débit de gaz (9), ladite conduite d'amenée de gaz (17) délivrant du gaz à l'échangeur de chaleur (3);
un ventilateur de circulation (6) et une soupape de régulation d'aspiration (8) reliée à la conduite de gaz de sortie (16) de la ou des unités de séparation (5, 5a, 5b) pour faire circuler les hydrocarbures gazeux des unités de séparation (5, 5a) à la conduite de gaz (17) et ayant un moyen pour régler la soupape (8);
une conduite de gaz dérivée (18) munie d'une soupape de régulation du débit de gaz (10) disposée après le ventilateur de circulation (6) et reliée à l'appareil de chauffage (2) pour délivrer les hydrocarbures gazeux à l'unité de chauffage (2) comme combustible;
dans lequel la chambre de réacteur du four de pyrolyse (1) est munie d'un détecteur de température (13) ainsi que d'un ensemble (12) formé d'une jauge de pression et/ou d'un transmetteur de pression (12) et l'ensemble (12) de jauge de pression et/ou de transmetteur de pression est raccordé au moyen de réglage de la soupape de régulation d'aspiration (8).

2. Système de pyrolyse fonctionnant en continu en boucle fermée selon la revendication 1, **caractérisé en ce que** son four de pyrolyse (1) est un four à tambour rotatif et son appareil de chauffage (2) est un brûleur à mazout.

3. Système de pyrolyse fonctionnant en continu en boucle fermée selon la revendication 1 ou 2, **caractérisé en ce que** la sortie de liquide de l'unité de séparation (5, 5a, 5b) est reliée à l'appareil de chauffage (2).

4. Système de pyrolyse fonctionnant en continu en boucle fermée selon l'une quelconque des revendications 1 à 3, **caractérisé en ce que** sa cuve pour produits solides (7) est munie d'une unité d'échantillonnage (20).

5. Système de pyrolyse fonctionnant en continu en boucle fermée selon l'une quelconque des revendications 1 à 4, **caractérisé en ce que** son compteur à gaz (11) est un orifice de mesure.

6. Système de pyrolyse fonctionnant en continu en boucle fermée selon l'une quelconque des revendications 1 à 5, **caractérisé en ce que** les dispositifs de refroidissement de gaz (4, 4a, 4b) sont des condenseurs refroidis à l'eau, tandis que leurs unités de séparation (5, 5a, 5b) sont des unités gravitationnelles de séparation ayant une sortie canalisée de gaz et une sortie de liquide.

7. Système de pyrolyse fonctionnant en continu en boucle fermée selon l'une quelconque des revendications 1 à 6, **caractérisé en ce qu'**un appareil de mesure de concentration est couplé à une de ses conduites de gaz (16, 17, 18).

## Patentansprüche

1. Kontinuierlich betriebene Pyrolyseanlage mit geschlossenem Arbeitskreis zur Entsorgung von Gummiabfällen, mit:
einem Pyrolyseofen (1) der mit
einer Reaktorkammer ausgestattet ist,
einem Dosierbehälter (21) für die Zuführung der Gummiabfälle in den Ofen (1),
einem Rauchgaskanal (19) und einer externen Heizeinrichtung (2) zum Heizen des Ofens (1) in Form eines Öl- oder Gasbrenners,
einer Gassammelleitung (15) zum Ablassen heißer Kohlenwasserstoffgase, welche während der Zersetzung des Gummis im Verlauf der Pyrolyse freigesetzt werden,
einem mittels der Gassammelleitung (15) mit dem Pyrolyseofen verbundenen Gaskühler (4a,4b), zum Abkühlen der Kohlenwasserstoffgase, und mit Trenneinheit(en) (5) mit einem an eine Gasausgangsleitung (16) angeschlossenen Gasraum,
einem mit dem Ofen (1) verbundenen Feststoffsammelbehälter (7),
einem zwischen dem Pyrolyseofen (1) und dem Feststoffsammelbehälter (7) angeordneten Wärmetauscher (3), der mit einer Gasleitung (17) verbunden ist, welche mit einem Gaszähler (11) und einem Gasmengenregelventil (9) versehen ist, wobei die Gaszufuhrleitung (17) den Wärmetauscher (3) mit Gas versorgt;
einem Zirkulationsventilator (6) und einem Saugkraftregulierungsventil (8), das mit der Gasausgangsleitung (16) der/den Trenneinheit(en) (5, 5a, 5b) zur Zirkulation von Kohlenwasserstoffgasen von der/den Trenneinheit(en) (5, 5a) zur Gasleitung (17) hin verbunden ist, und welcher Mittel zur Ventilsteuerung (8) aufweist;
einer Gasabzweigleitung (18), die mit einem hinter dem Zirkulationsventilator (6) angeordneten Gasmengenregelventil (10) versehen und mit der Heizvorrichtung (2) zur Versorgung der Heizvorrichtung (2) mit Kohlenwasserstoffgasen als Brennstoff verbunden ist;
wobei die Reaktorkammer des Pyrolyseofens (1) mit einem Temperaturfühler (13) sowie einem Druckmesser bzw. Druckgeber (12) versehen ist, und wobei der Druckmesser bzw. Druckgeber (12) an das Steuerungsmittel des Saugkraftregulierungsventils (8) angeschlossen ist.

2. Kontinuierlich betriebene Pyrolyseanlage mit geschlossenem Arbeitskreis nach Anspruch 1, **dadurch gekennzeichnet, dass** sein Pyrolyseofen (1) ein Drehtrommelofen ist und seine Heizvorrichtung (2) ein Ölbrenner ist.

3. Kontinuierlich betriebene Pyrolyseanlage mit geschlossenem Arbeitskreis nach Anspruch 1 oder 2, **dadurch gekennzeichnet, dass** der Flüssigkeitsauslass der Trenneinheit (5, 5a, 5b) mit der Heizvorrichtung (2) verbunden ist.

4. Kontinuierlich betriebene Pyrolyseanlage mit geschlossenem Arbeitskreis nach einem der Ansprüche 1 bis 3, **dadurch gekennzeichnet, dass** sein Feststoffsammelbehälter (7) mit einer Probenahmeeinheit (20) versehen ist.

5. Kontinuierlich betriebene Pyrolyseanlage mit geschlossenem Arbeitskreis nach einem der Ansprüche 1 bis 4, **dadurch gekennzeichnet, dass** sein Gaszähler (11) eine Messblende ist.

6. Kontinuierlich betriebene Pyrolyseanlage mit geschlossenem Arbeitskreis nach einem der Ansprüche 1 bis 5, **dadurch gekennzeichnet, dass** die Gaskühler (4, 4a, 4b) wassergekühlte Kondensatoren sind, während ihre Trenneinheiten (5, 5a, 5b) Schwerkrafttrennungseinheiten mit einem Gaskanalausgang und einem Flüssigkeitsausgang sind.

7. Kontinuierlich betriebene Pyrolyseanlage mit geschlossenem Arbeitskreis nach einem der Ansprüche 1 bis 6, **dadurch gekennzeichnet, dass** ein Konzentrationsmesser an eine ihrer Gasleitungen (16, 17, 18) gekoppelt ist.
